# EUROPÄISCHE PATENTSCHRIFT

(11) **EP 0 529 747 B1**
(45) Veröffentlichungstag und Bekanntmachung des Hinweises auf die Patenterteilung: **10.01.1996**
(21) Anmeldenummer: 92250192.9
(22) Anmeldetag: 20.07.1992
(51) Int. Cl.: B60R 17/02

(54) **Schaltungsanordnung zur zeitabhängigen Steuerung der Schmierung von Anhängern**
Control device for time dependant lubrication of trailers
Dispositif de commande temporelle de lubrification de remorque

(30) Priorität: 28.08.1991 DE 4129009
(43) Veröffentlichungstag der Anmeldung: 03.03.1993
(73) Patentinhaber: SCHLEICHER GMBH & CO. RELAIS-WERKE KG, D-13597 Berlin (DE)
(72) Erfinder: Baensch, Mathias, W-1000 Berlin 20 (DE); Kotsias, Athanase, W-1000 Berlin 47 (DE); Friedrich, Karl D., W-1000 Berlin 27 (DE)
(74) Vertreter: Pfenning, Meinig & Partner

(56) Entgegenhaltungen:
- EP-A- 0 131 910
- EP-A- 0 258 550
- DE-A- 3 711 673

## Beschreibung

Die Erfindung betrifft eine Schaltungsanordnung zur zeitabhängigen Steuerung der Schmierung von Anhängern nach dem Oberbegriff des Hauptanspruchs.

Die Schmierung von Anhängern von Nutzfahrzeugen soll während der Fahrt des Fahrzeuges durchgeführt werden, wobei die Spannungsversorgung für die Schmierung von der Batterie des Nutzfahrzeuges geliefert wird. Die Batterie des Nutzfahrzeuges ist jedoch nur bei bestimmten Vorgängen beispielsweise beim Betätigen der Bremse, bei Einschalten des Lichts und bei Betätigen des Blinkers mit dem Anhänger verbunden. Nach dem Stand der Technik erfolgt die Schmierung über eine Steuerung, die mit Spannung versorgt wird, wenn die Bremse betätigt wird. Es hat sich in der Praxis gezeigt, daß zwischen den einzelnen Schmiervorgängen ausreichend viel Zeit vorhanden sein muß, damit keine Überschmierung stattfindet. Hier sind durch die Art der Schaltung Grenzen gesetzt, da die Pausenzeit durch Auf- oder Entladen eines Kondensators über einen Widerstand gebildet wird, wobei aufgrund dieser Schaltung den zu bildenden Zeiten Grenzen gesetzt sind. Diese werden durch die Größe des Kondensators und des Widerstandes bestimmt sowie durch die Art der Schaltung, da der Kondensator in großem Maße auch durch die auswertende bzw. steuernde Halbleiterschaltung entladen wird.

Nach dem in EP-A-0 131 910 und DE-A-37 11 673 dargestellten Stand der Technik wird daher die Schmierpausenzeit über einen Zeitgeber realisiert, der zum Beispiel als Oszillator-Pulszähler-Kombination in vorbestimmten Abständen Pulse erzeugt. In DE-A-37 11 673 sind zwei Zeitkreise zur Bildung der Schmierzeit (IC1) und der Pausenzeit (IC2) vorgesehen, wobei IC2 den Zeitkreis IC1 erst nach Ablauf der vorgesehenen Pausenzeit freigibt. Der zur Bildung der Pausenzeit eingesetzte Schaltkreis IC2 kann als programmierbarer Timer einen integrierten Binärzähler und einen extern zu beschaltenden Oszillator enthalten. Die in EP-A-0 131 910 zur Bildung der Pausenzeit vorgesehene Zeitbildungseinrichtung besteht ebenfalls aus einem Impulsgeber (Oszillator) und einem Impulszähler. Nach Ablauf der Schmierpausenzeit wird hier die Schaltung zur Ansteuerung der Schmierpumpe freigegeben. Sowohl in EP-A-0 131 910 als auch in DE-A-37 11 673 wird ein Ladekondensator verwendet, der die Spannungsversorgung der Schmiersteuerung aufrechterhält, wenn kein Brems- bzw. Blinkvorgang getätigt wird.

Der Erfindung liegt die Aufgabe zugrunde, eine Schaltungsanordnung zur Steuerung der zeitabhängigen Schmierung von Fahrzeugen zu schaffen, die lange Pausenzeiten zwischen den Schmierungen zur Verfügung stellt, wobei diese Pausenzeiten unabhängig von den Toleranzen der Selbstentladezeitkonstante des Kondensators sein soll.

Diese Aufgabe wird erfindungsgemäß durch die Merkmale des Hauptanspruchs gelöst.

Dadurch, daß eine erste Schaltung zur Bildung der Pausenzeit zwischen zwei Schmierungen und eine Zeitgeberschaltung zur Ansteuerung der ersten Schaltung zur Bildung der Pausenzeiten vorgesehen sind, wobei die Schaltung zur Bildung der Pausenzeit zwischen zwei Schmierungen einen Zeitkondensator aufweist, der sich beim Betätigen der Bremse auflädt und die Zeitgeberschaltung Taktimpulse an die Schaltung zur Bildung der Pausenzeit liefert, die jeweils eine gezielte Entladung des Zeitkondensators auf feste Spannungswerte hervorrufen, werden die Toleranzen der selbstentladezeitkonstante des Kondensators ausgeschaltet, da eine definierte Zeit durch eine zeitabhängige, gezielte Entladung des Kondensators zur Verfügung gestellt wird, wobei die Entladung jeweils auf einem Spannungswert stattfindet, der unterhalb der Toleranzgrenzen liegt.

Durch die in den Unteransprüchen angegebenen Maßnahmen sind vorteilhafte Weiterbildungen und Verbesserungen möglich. Besonders vorteilhaft ist, daß die Steuerung der Freigabe der Schmierung über einen MOS-Feldeffekttransisitor erfolgt, der über das Gate spannungsabhängig fast stromlos zu steuern ist. Dadurch können Pausenzeiten gebildet werden, die im Stundenbereich liegen.

Die Zeitgeberschaltung gibt den Zeitbereich vor, nachdem der Zeitkondensator gezielt auf einen vorgegebenen Spannungswert entladen werden soll, wobei die Spannungsversorgung der Zeitgeberschaltung ebenfalls über einen Kondensator erfolgt, der durch die Betätigung der Bremse aufgeladen wird.

Dadurch, daß lediglich die Spannung U1 ständig zur Verfügung gestellt werden muß, ist der Leistungsbedarf so gering, daß die Spannungsversorgung durch den Ladekondensator C101 auch in bis zu zweistündigen, bremsfreien Pausen sichergestellt ist.

Als Zeitkondensator wird ein Folienkondensator verwendet, der eine große Selbstentladezeitkonstante aufweist, wobei die Pausen durch Parallelschalten eines Widerstandes am Kondensator bestimmt werden können.

Die Tatsache, daß ein MOS-Feldeffekttransistor durch die Ladung des Zeitkondensators, den er selbst aufgrund des sehr kleinen Gate-Leckstromes kaum entlädt, über längere Zeiten leitend bleibt, ist die Verwendung einer Batterie nicht nötig.

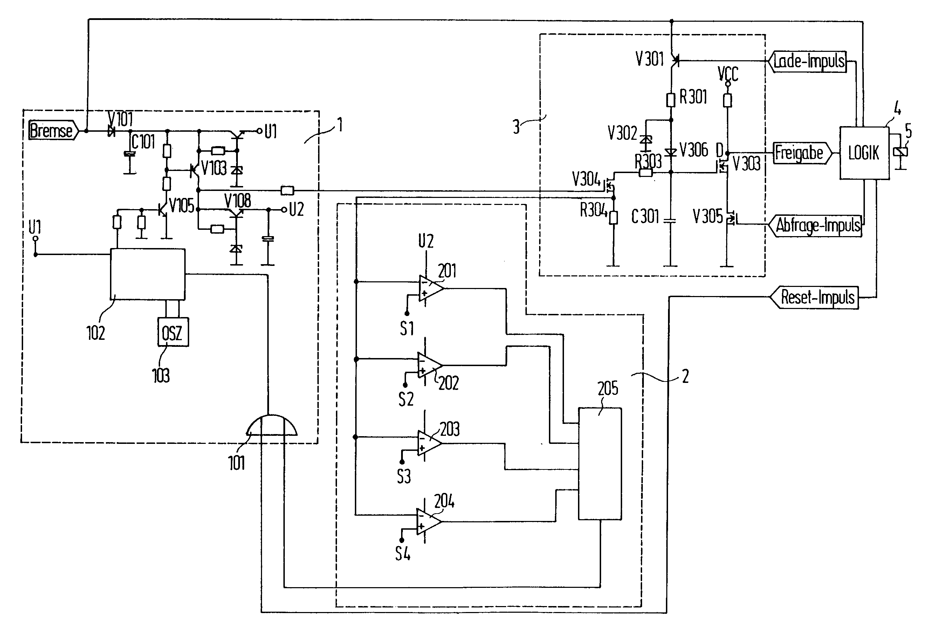

Ein Ausführungsbeispiel der Erfindung ist in der Zeichnung dargestellt und wird in der nachfolgenden Beschreibung näher erläutert. Die einzige Figur zeigt die schaltungsgemäße Ausgestaltung der erfindungsgemäßen Steuerung.

Gemäß der Figur besteht die Schaltungsanordnung aus einer Schaltung 3 zur Bildung der Pausenzeit, einer Zeitgeberschaltung 1 und einer Vergleichsschaltung 2. Darüber hinaus ist eine Logikschaltung 4 vorgesehen, die mit dem nicht dargestellten Bremsschalter verbunden ist und das Relais 5 für die Schmierung ansteuert. Die Schaltung zur Bildung der Pausenzeit 3 weist einen mit dem Bremsschalter verbundenen Transistor V301, einen Widerstand 301, eine Diode V306, einen Zeitkondensator C301 und eine Z-Diode V302 auf, die die Ladespannung für den Kondensator C301 vorgibt. Die Basis des Transistors V301 ist mit der Logikschaltung verbunden. Der Zeitkondensator C301 ist an das Gate eines MOS-Feldeffekttransistors V303 angeschlossen, dessen Drainanschluß mit der Logikschaltung verbunden ist und dessen Sourceanschluß über einen weiteren MOS-FET 305 an Masse geht. Das Gate des MOS-FETs V305 ist mit der Logikschaltung 4 verbunden.

Der Kondensator C301 ist über einen Widerstand R303 mit dem Drain-Anschluß eines weiteren MOS-Feldeffekttransistors V304 verbunden, dessen Source-Anschluß über einen Entladewiderstand R304 und V306 an Masse geht und darüber hinaus mit der Vergleichsschaltung 2 in Verbindung steht. Die Vergleichsschaltung 2 weist vier Komparatoren 201, 202, 203, 204 auf, deren invertierende Eingänge mit dem Source-Anschluß des MOS-FETs V304 verbunden sind und an deren nichtinvertierenden Eingängen jeweils eine Schwellenspannung S1 bis S4 liegt. Die Ausgänge gehen über eine Torschaltung 205 oder ein ODER-Gatter 101 an einen als monostabilen Vibrator arbeitenden Timer 102 der Zeitgeberschaltung 1. Ein zweiter Anschluß des ODER-Gatters 101 ist mit der Logikschaltung 4 verbunden, die ein Reset-Impuls liefert. Wesentliche Bestandteile der Zeitgeberschaltung ist der an einem Oszillator 103 angeschlossene Timer 102, dessen Ausgang über einen ersten Transistor V105 und einen zweiten Transistor V103 und einen Widerstand R104 mit dem Gate des MOS-FETs V304 verbunden ist. Weiterhin ist ein Ladekondensator C101 und eine Diode V101 vorgesehen, die ein Rückfluß der Ladung über den Bremsschalter verhindert. Ein weiterer Transistorschaltung V108 steht mit dem Transistsor V103 in Verbindung und liefert die Versorgungsspannung U2 für die Komparatoren, wenn er durchgeschaltet ist. Die übrigen Bestandteile der Schaltung werden nicht ausdrücklich erwähnt und erläutert und hinsichtlich ihrer Beschaltung wird auf die Figur Bezug genommen.

Die Funktionsweise der Schaltungsanordnung wird im folgenden beschrieben. Wenn der Bremsschalter betätigt wird, wird der Kondensator C301 über den Transistor V301, den Widerstand R301 und die Diode V306 aufgeladen, wobei die Logikschaltung 4 den Transistor V301 durchsteuert. Wenn der Kondensator vorher vollständig entladen war, wird eine Schmierung von der Logikschaltung eingeleitet. Der Zeitkondensator C301 wird auf eine Spannung von 18 V aufgeladen. Der Zeitkondensator C301 ist als Folienkondensator ausgebildet, der eine lange Selbstentladungszeit aufweist. Die Selbstentladezeitkonstante eines Folienkondensators kann fertigungstechnisch bedingt variieren, so daß die Bildung einer vorher definierten Zeit durch das Selbstenladen des Kondensators unmöglich ist. Daher muß eine feste Zeit gebildet werden, die die unterste Grenze der Toleranz berücksichtigt.

Zur Bildung der Pausenzeit beispielsweise von acht Stunden wird der Zeitkondensator in mehreren Stufen gezielt auf bestimmte Spannungswerte entladen. Dazu ist die Zeitgeberschaltung 1 mit dem Timer 102 vorgesehen, der beispielsweise in Abständen von zwei Stunden einen Impuls zur Entladung liefert. Der erste Impuls entlädt den Zeitkondensator C301 beispielsweise auf 12 V, d.h. auf einen Wert, der unterhalb der unteren Selbstentladekurve des Folienkondensators C301 für die Zeit von zwei Stunden liegt. Der zweite Impuls zwei Stunden später entlädt den Zeitkondensator C301 auf 8 V, der dritte Impuls auf 5 V und der vierte Impuls ebenfalls zwei Stunden später unter 0,5 V. Zur Entladung wird vom Ausgang des Timers 102 über die Transistoren V105 und V103 ein Impuls an das Gate des MOS-FETs V304 geliefert, der durchschaltet, so daß der Zeitkondensator C301 sich über den Widerstand R303, den MOS-FET V304 und den Widerstand R304 auf den vorgegebenen Schwellenwert entlädt. Die Schwellenspannung bzw. die Vergleichsspannung für die Entladung auf bestimmte Spannungswerte werden durch die Vergleichsschaltung 2 vorgegeben, d.h. die Entladespannung wird jeweils mit der Schwellenspannung S1, S2, S3 oder S4 der Komparatoren 201 bis 204 verglichen und wenn die jeweiligen Schwellenspannungen unterschritten werden, liefern die entsprechenden Komparatoen 201 bis 204 ein Ausgangssignal, das über die Torschaltung 205 und das ODER-Gatter 101 an den Reset-Eingang des Timers 102 geliefert wird, der zurückgesetzt wird und somit den Entladevorgang beendet. Nach zwei Stunden wiederholt sich der Vorgang. Der erste Komparator 201 spricht nach der ersten Entladung bzw. nach dem ersten Vergleich an, aber auch jedesmal, wenn der zweite, dritte und vierte Entladevorgang vorkommt.

Der Timer 102 erhält seine Spannung von dem Ladekondensator C101, der jedesmal, wenn die Bremse betätigt wird, aufgeladen wird. Der aufgeladene Kondensator C101 kann die Timerschaltung 102 mindestens zwei Stunden versorgen. Wird oft genug, d.h. mindestens einmal in zwei Stunden gebremst, so werden die Timerimpulse regelmäßig im Abstand von zwei Stunden geliefert und die 8-Stunden-Pausenzeit kann ohne Fehler gebildet werden. Die Spannung U2, die für den Betrieb der Komparatoren notwendig ist, wird über den Transistor V103 und den Transistorschalter V106 von dem Kondensator C101 geliefert, wobei die Versorgungsspannung über den Transistorschalter V106 nur dann angelegt wird, wenn der Timerimpuls zur Entladung geliefert wird.

Die Spannung des Zeitkondensators C301 wirkt auf das Gate des MOS-FETs V303, d.h., wenn der Zeitkondensator C301 aufgeladen wird, wird der MOS-FET V303 leitend und bleibt leitend, bis seine Gate-Source-Schwellenspannung unterschritten wird. Solange der MOS-FET V303 leitend ist, wird eine Schmierung verhindert, d.h. es läuft eine Pause ab. Der Gate-Leckstrom des MOS-FETs ist äußerst gering und er kann über das Gate spannungsabhängig fast stromlos gesteuert werden.

Wenn die Bremse betätigt wird, wird von der Logikschaltung ein Abfrageimpuls an den MOS-FET V305 von kurzer Dauer abgegeben, der den Source-Anschluß vom FET V303 an Massepotential legt. Durch diese Maßnahme wird der Ladungsverlust des Zeitkondensators C301 über das Gate noch kleiner gehalten, da der Source-Anschluß nur dann an Masse über den FET V305 angeschlossen wird, wenn die Logikschaltung 4 den Abfrageimpuls liefert. Hier wird die Eigenschaft des MOS-FETs ausgenutzt, daß der Drain-Source-Strom bei der Gate-Source Spannung gleich 0 V kleiner ist als der Gate-Body-Leckstrom bei der Drain-Source-Spannung gleich 0 und der Gate-Source-Spannung gleich 15 V.

Je nach Ladezustand des Zeitkondensators C301 wird ein Impuls für eine Schmierung von der Logikschaltung 4 abgegeben oder nicht. Ist nämlich der Zeitkondensator C301 geladen, so ist der FET V303 leitend und im Moment der Abfrage bleibt sein Drain-Anschluß auf Low-Potential. Ist aber der Zeitkondensator C301 entladen, so ist der FET V303 gesperrt, sein Drain-Anschluß hat High-Potential und dies führt zu einer Schmierung. Das Relais 5 wird für die Dauer von 100 ms eingeschaltet. Gleichzeitig wird durch einen Ladeimpuls über den Transistor V301, den Widerstand R301 und die Diode V306 der Zeitkondensator C301 auf ungefähr 18 V geladen, die durch die Zenerdiode V302 vorgegeben wird. Damit der Timer 102 mit Beginn der Schmierung seine Zeit startet, wird er über den Reset-Impuls, der von der Logikschaltung 4 über das ODER-Gatter 101 geliefert wird, zurückgesetzt.

Bei der letzten Entladephase des Zeitkondensators 301, bei der auch der letzte Komparator 204 anspricht, wird der Kondensator C301 unter die Gate-Source-Schwellenspannung des MOS-FETs V303 entladen, so daß bei einer Abfrage des Ladezustandes durch die Logikschaltung 4 über den MOS-FET V305 eine Schmierung eingeleitet werden kann.

Wird die Bremse über längere Zeit nicht mehr betätigt, so entlädt sich der Ladekondensator C101 für die Zeitgeberschaltung vollständig, so daß der Timer 102 keine Entladeimpulse für den Zeitkondensator C301 liefern kann, wodurch dieser sich selbst entlädt. Die Pausenzeit wird in diesem Fall mit einem Fehler behaftet sein, d.h. die Pausenzeit verlängert sich beispielsweise auf 16 Stunden. Der Nachteil der längeren Pause scheint aber nicht kritisch zu sein, da der Anhänger offensichtlich nicht beansprucht wird, wenn nicht gebremst wird.

## Patentansprüche

1. Schaltungsanordnung zur zeitabhängigen Steuerung der Schmierung von Anhängern von Nutzfahrzeugen, wobei die Schmierung abhängig von dem Betätigen der Bremse durchgeführt wird, mit einem Ladekondensator zur Spannungsversorgung mit einer ersten Schaltung (3) zur Bildung der Pausenzeit zwischen zwei Schmierungen und einer zweiten Schaltung (1) zur Ansteuerung der ersten Schaltung (3),
**dadurch gekennzeichnet,** daß die erste Schaltung (3) einen Zeitkondensator (C301) aufweist, der sich beim Betätigen der Bremse auflädt, und daß die zweite Schaltung (1) in vorgegebenen zeitlichen Abständen Impulse an die erste Schaltung (3) liefert, die jeweils eine gezielte Entladung des Zeitkondensators (C301) auf vorgegebene Spannungswerte hervorrufen.

2. Schaltungsanordnung nach Anspruch 1, dadurch gekennzeichnet, daß der Ladekondensator (C101) beim Betätigen der Bremse mit der spannungsquelle des Fahrzeugs verbunden ist und sich auflädt und die Spannungsversorgung für die zweite Schaltung (1) bildet.

3. Schaltungsanordnung nach Anspruch 1 oder 2, dadurch gekennzeichnet, daß eine Vergleichsschaltung (2) vorgesehen ist, die beim Entladen des Zeitkondensators (C301) dessen Spannung mit vorgegebenen Vergleichsspannungen vergleicht und bei Gleichheit der Spannung des Zeitkondensators (C301) mit einer der Vergleichsspannungen die jeweilige Entladung über die Zeitgeberschaltung (1) beendet.

4. Schaltungsanordnung nach Anspruch 3, dadurch gekennzeichnet, daß die Vergleichsschaltung (2) über einen Schalter (V108) nur mit Spannung versorgt wird, wenn Impulse von der zweiten Schaltung (1) an die erste Schaltung (3) geliefert werden.

5. Schaltungsanordnung nach einem der Ansprüche 1 bis 4, dadurch gekennzeichnet, daß der Zeitkondensator (C301) mit einem elektronischen Schalter (V303) verbunden ist, der schaltet, wenn der Zeitkondensator (C301) unter seine Schaltspannung entladen wird und der den Schmiervorgang freigibt.

6. Schaltungsanordnung nach Anspruch 5, dadurch gekennzeichnet, daß der elektronische Schalter (V303) ein MOS-Feldeffektransistor ist, wobei das Gate des MOS-FETs (V303) mit dem Zeitkondensator (C301) verbunden ist.

7. Schaltungsanordnung nach einem der Ansprüche 1 bis 6, dadurch gekennzeichnet, daß der Zeitkondensator (C301) als Folienkondensator ausgebildet ist.

8. Schaltungsanordnung nach einem der Ansprüche 1 bis 7, dadurch gekennzeichnet, daß die zweite Schaltung (1) über einen MOS-Feldeffekttransistor (V304) mit dem Zeitkondensator (C301) verbunden ist.

## Claims

1. Circuit arrangement for the time-dependent control of the lubrication of trailers of commercial vehicles, wherein the lubrication is carried out independently of operation of the brake, with a charging capacitor for voltage supply with a first circuit (3) to form the pause time between two lubrications and a second circuit (1) for actuation of the first circuit (3), characterised in that the first circuit (3) has a time capacitor (C301) which is charged during operation of the brake, and that at predetermined time intervals, the second circuit (1) passes pulses to the first circuit (3) which respectively cause a purposeful discharge of the time capacitor (C301) to predetermined voltage values.

2. Circuit arrangement according to Claim 1, characterised in that the charging capacitor (C101) is connected to the voltage source of the vehicle during operation of the brake, and is charged and forms the voltage supply for the second circuit (1).

3. Circuit arrangement according to Claim 1 or 2, characterised in that a comparator circuit (2) is provided, which during discharge of the time capacitor (C301) compares its voltage with predetermined reference voltages and ends the respective discharging via the time constant circuit (1), when the voltage of the time capacitor (C301) is the same as one of the reference voltages.

4. Circuit arrangement according to Claim 3, characterised in that the comparator circuit (2) is supplied with voltage via a switch (V108) only when pulses are passed by the second circuit (1) to the first circuit (3).

5. Circuit arrangement according to one of Claims 1 to 4, characterised in that the time capacitor (C301) is connected to an electronic switch (V303) which switches when the time capacitor (C301) is discharged below its switching voltage and triggers the lubrication process.

6. Circuit arrangement according to Claim 5, characterised in that the electronic switch (V303) is an MOS field-effect transistor, the gate of the MOS field-effect transistor (V303) being connected to the time capacitor (C301).

7. Circuit arrangement according to one of Claims 1 to 6, characterised in that the time capacitor (C301) is constructed as a foil capacitor.

8. Circuit arrangement according to one of Claims 1 to 7, characterised in that the second circuit (1) is connected via an MOS field-effect transistor (V304) to the time capacitor (C301).

## Revendications

1. Montage pour commander, en fonction du temps, la lubrification de remorques de véhicules utilitaires, lubrification qui est exécutée en fonction de l'actionnement du frein, et comportant un condensateur de charge pour l'alimentation en tension, avec un premier circuit (3) pour former le temps de pause entre deux lubrifications et un second circuit (1) pour la commande du premier circuit (3), caractérisé en ce que le premier circuit (3) comporte un condensateur de temporisation (C301), qui se charge pendant l'actionnement du frein, et en ce que le second circuit (1) envoie au premier circuit (3), à des intervalles de temps prédéterminés, des impulsions qui provoquent respectivement une décharge voulue du condensateur de temporisation (C301) à des valeurs prédéterminées de tension.

2. Montage suivant la revendication 1, caractérisé par le fait que lors de l'actionnement du frein, le condensateur de charge (C101) est relié à la source de tension du véhicule et se charge et forme deux systèmes d'alimentation en tension pour le second circuit (1).

3. Montage suivant la revendication 1 ou 2, caractérisé en ce qu'il est prévu un circuit comparateur (2) qui, lors de la décharge du condensateur de temporisation (C301), compare la tension aux bornes de ce condensateur à des tensions de comparaison prédéterminées et, en cas d'égalité entre la tension du condensateur de temporisation (C301) et l'une des tensions de comparaison, arrête la décharge respective par l'intermédiaire du circuit de temporisation (1).

4. Montage suivant la revendication 3, caractérisé en ce que le circuit comparateur (2) est alimenté en tension par l'intermédiaire d'un interrupteur (V108) uniquement lorsque des impulsions sont envoyées par le second circuit (1) au premier circuit (3).

5. Montage suivant l'une des revendications 1 à 4, caractérisé en ce que le condensateur de temporisation (C301) est relié à un interrupteur électronique (V303) qui est commuté lorsque le condensateur de temporisation (C301) est déchargé au-dessous de sa tension de commutation et libère le processus de lubrification.

6. Montage suivant la revendication 5, caractérisé en ce que l'interrupteur électronique (V303) est un transistor à effet de champ MOS, la grille du transistor MOS-FET (V303) étant reliée au condensateur de temporisation (C301).

7. Montage suivant l'une des revendications 1 à 6, caractérisé en ce que le condensateur de temporisation (C301) est réalisé sous la forme d'un condensateur en forme de feuille.

8. Montage suivant l'une des revendications 1 à 7, caractérisé en ce que le second circuit (1) est relié au condensateur de temporisation (C301) par l'intermédiaire d'un transistor à effet de champ MOS (V304).
